# EUROPÄISCHE PATENTANMELDUNG

(11) **EP 1 375 012 A2**
(43) Veröffentlichungstag der Anmeldung: **02.01.2004**
(21) Anmeldenummer: 03010037.4
(22) Anmeldetag: 02.05.2003
(51) Int. Cl.: B05B 12/14, G01V 3/165

(54) **Einrichtung zur Bestimmung der Position eines Molches**

(30) Priorität: 10.05.2002 DE 10220676
(71) Anmelder: Eisenmann Lacktechnik KG, (Komplementär: Eisenmann-Stiftung), 71032 Böblingen (DE)
(72) Erfinder: Albrecht, Marcus, 71634 Ludwigsburg (DE); Ucan, Aydin, 71634 Ludwigsburg (DE)
(74) Vertreter: Ostertag, Ulrich, Dr.

(57) **Zusammenfassung**

Eine Einrichtung zur Bestimmung der Position eines Molches (1), der zum Transport von Beschichtungsmaterial in einem Versorgungsweg des Beschichtungsmaterials verschiebbar ist, umfasst einen auf die Anwesenheit des Molches ansprechenden Sensor (3). Dieser Sensor (3) ist in einem gesonderten Meßkopf (2) untergebracht, der eine innere, autarke Spannungsquelle (3), insbesondere eine Batterie, und eine Schaltungsanordnung enthält, die ein für die An- oder Abwesenheit des Molches (1) am Sensor (3) stehendes elektrisches Ausgangssignal erzeugt. Die Information in diesem Ausgangssignal wird mittels einer Einrichtung, die hierzu ohne galvanische Verbindung auskommt, vorzugsweise über einen Lichtwellenleiter (6), einer Auswertschaltung (7) zugeleitet, die elektrisch isoliert in einer Entfernung vom Meßkopf (2) angeordnet ist und ihrerseits ein elektrisches Ausgangssignal erzeugt, das zur Steuerung anderer Anlagenteile verwendet werden kann. Eine solche Einrichtung kann zur Erfassung von Molchen (1) auch dort eingesetzt werden, wo, wie in elektrostatisch arbeitenden Beschichtungsanlagen häufig, der Sensor an einer Stelle angebracht werden muß, die sich auf hohem elektrischen Potential befindet.

## Beschreibung

Die Erfindung betrifft eine Einrichtung zur Bestimmung der Position eines Molches, der zum Transport von Beschichtungsmaterial, insbesondere von flüssigem oder pulverförmigen Lack, in einem Versorgungsweg des Beschichtungsmaterials verschiebbar ist, mit
a) einem auf die Anwesenheit des Molches ansprechenden Sensor;
b) einer Schaltungsanordnung, welcher das Ausgangssignal des Sensors zugeführt wird und ein elektrisches Ausgangssignal erzeugt, das für die An- oder Abwesenheit des Molches an dem Sensor repräsentativ ist.

In der Beschichtungstechnik ist es weit verbreitet, das Beschichtungsmaterial mit Hilfe eines Molches durch einen Schlauch z.B. von einer Vesorgungsquelle an einen anderen Ort, insbesondere zu Applikationseinrichtungen, zu befördern. Die Bewegung des Molches, insbesondere dessen Ankunft an den verschiedenen Molchstationen, wird mit Hilfe von Einrichtungen der eingangs genannten Art überwacht. Deren Ausgangssignal kann dann zur Steuerung von Ventilen, zur Schaltung von Spannungen o. ä. verwendet werden. Als Sensoren kommen sowohl solche im Frage, die induktiv oder optisch arbeiten, als auch solche, die auf das Magnetfeld eines magnetischen Materials ansprechen, das von dem Molch mitgeführt wird.

Bei den bekannten, derzeit auf dem Markt befindlichen Einrichtungen zur Bestimmung der Position eines Molches ist im allgemeinen der Sensor über eine elektrische Leitung mit der Steuerschaltung verbunden. Dies ist solange möglich, wie sich der Sensor nicht auf hohem elektrischem Potential befindet. Letzteres ist beispielsweise bei Molchstationen der Fall, die mit Innenaufladung arbeitenden Applikationseinrichtungen, z. B. Hochrotationszerstäubern, zugeordnet sind.

Aufgabe der vorliegenden Erfindung ist es, eine Einrichtung der eingangs genannten Art so auszugestalten, daß sie auch dort verwendbar ist, wo die Stelle, an der die Anwesenheit des Molches überwacht werden soll, sich auf einem sehr hohen Potential gegenüber Erdpotential befindet, ohne daß die Gefahr eines elektrischen Überschlages besteht.

Diese Aufgabe wird erfindungsgemäß dadurch gelöst, daß
c) der Sensor in einem gesonderten Meßkopf untergebracht ist, der eine innere, autarke Stromquelle, insbesondere eine Batterie, und eine Schaltungsanordnung enthält, die ein für die An- oder Abwesenheit des Molchs am Sensor stehendes elektrisches Ausgangssignal erzeugt;
d) eine Auswertschaltung vorgesehen ist, die elektrisch isoliert in einer Entfernung vom Meßkopf angeordnet ist und ihrerseits ein elektrisches Ausgangssignal erzeugt, das zum Steuern anderer Anlageteile verwendbar ist;
e) eine Einrichtung vorgesehen ist, welche die im Ausgangssignal des Meßkopfes enthaltene Information ohne galvanische Verbindung der Auswertschaltung zuführt.

Erfindungsgemäß wird also der Sensor, der auf die Anwesenheit eines Molches in seiner Nachbarschaft anspricht, in einen gesonderten Meßkopf integriert, der gemeinsam mit dem Sensor auf hohes elektrisches Potential gelegt werden kann. Damit in diesem Meßkopf ein eigenes elektrisches Signal erzeugt werden kann, enthält er eine autarke Stromquelle. Das Ausgangssignal dieses Meßkopfes wird über eine Verbindung, welche auf galvanische Elemente verzichtet, der Auswertschaltung zugeführt. Diese erzeugt erneut ein elektrisches, zu Steuerungszwecken verwendbares Signal. Es liegt somit eine vollständige galvanische Trennung zwischen dem auf hohem Potential liegenden Meßkopf und der auf niedrigem Potential, beispielsweise Erdpotential, liegenden Auswertschaltung vor. Bei ausreichender Entfernung zwischen dem Meßkopf und der Auswertschaltung kann die Gefahr eines elektrischen Überschlages vollständig ausgeräumt werden.

Besonders bevorzugt ist, wenn die im Merkmal e) des Anspruches 1 erwähnte Einrichtung eine Leuchtdiode in dem Meßkopf, einen an einem Ende von der Leuchtdiode beleuchteten Lichtwellenleiter und eine von dem anderen Ende des Lichtwellenleiters beleuchtete, in der Auswertschaltung angeordnete Empfangsdiode umfasst. Die elektrooptischen Komponenten, die für eine derartige Licht-Kopplung zwischen Meßkopf und Auswertschaltung erforderlich sind, sind handelsüblich und preiswert erhältlich.

Alternativ kann auch diejenige Ausführungsform der Erfindung zum Einsatz kommen, bei der die im Merkmal e des Anspruches 1 erwähnte Einrichtung einen Funksender in dem Meßkopf und einen Funkempfänger in der Auswertschaltung umfasst. Diese Ausgestaltung der Erfindung ist aufwendiger, jedoch flexibler in der Wahl der Anordnung von Meßkopf und Auswertschaltung zueinander.

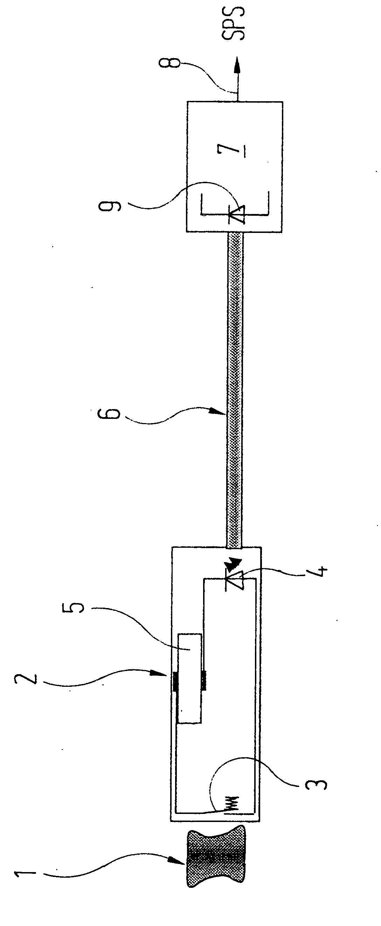

Ein Ausführungsbeispiel der Erfindung wird nachfolgend anhand der Zeichnung näher erläutert; die einzige Figur zeigt schematisch eine Einrichtung zur Erfassung eines Molches an einer auf Hochspannung liegenden Molchstation.

In der Zeichnung ist mit dem Bezugszeichen 1 ein Molch dargestellt, wie er zur Förderung von Lack, insbesondere Lackpulver, in einem entsprechenden Schlauch von der Lackversorgung zu einer Applikationseinrichtung an und für sich bekannt ist. Der Schlauch selbst, in dem sich der Molch 1 bewegt, ist in der Zeichnung nicht dargestellt. Um die Position des Molches 1 innerhalb des Lackförderweges feststellen zu können, ist mindestens ein Magnet in ihn integriert.

Der Molch 1 befindet sich in einer Molchstation, die einer mit einer Hochspannungselektrode arbeitenden Applikationseinrichtung zugeordnet und ebenfalls aus Übersichtlichkeitsgründen nicht gezeigt ist. Dies bedeutet, daß sich die gesamte Molchstation auf hohem Potential befindet, das typischerweise bei 60 kV oder darüber liegen kann.
Die Ankunft des Molches 1 in dieser der Applikationseinrichtung zugeordneten Molchstation wird mit Hilfe eines Meßkopfes 2 ermittelt, in den ein Magnetfeld-empfindlicher Schalter 3 integriert ist. Der Schalter 3 liegt elektrisch in Reihe mit einer Leuchtdiode 4; diese Serienschaltung wird aus einer Batterie 5 gespeist.

In das dem Magnetfeld-empfindlichen Schalter 3 gegenüberliegende Ende des Meßkopfes 2 ist ein Lichtwellenleiter 6 eingeführt, dessen dortiges Ende von der Leuchtdiode 4 bestrahlt werden kann. Der Lichtwellenleiter 6 verbindet den Meßkopf 2 mit einer Auswertschaltung 7, in der sich u. a. eine Empfangsdiode 9 befindet, welche die ihr übermittelten Lichtsignale in elektrische Signale zurückverwandelt. Über einen Ausgang 8 der Auswertschaltung 7 werden entsprechende Signale an die zentrale Steuerung SPS der Lackieranlage abgegeben, zu welcher der den Molch 1 führende Schlauch gehört.

Die oben beschriebene Einrichtung funktioniert wie folgt:

Solange sich der Molch 1 nicht in der dem Meßkopf 2 zugeordneten Molchstation befindet, ist der magnetfeldempfindliche Schalter 3 geöffnet. Es fließt somit kein Strom durch die Leuchtdiode 4, so daß diese auch kein Licht in den Lichtwellenleiter 6 abgibt. Am Ausgang 8 der Auswertschaltung 7 liegt ein entsprechendes Signal, welches der zentralen Steuerung der Anlage die Abwesenheit des Molches 1 signalisiert.

Ist der Molch 1 dagegen in der Molchstation angelangt, befindet sich also in der in der Zeichnung dargestellten Position, so schließt der magnetfeldempfindliche Schalter 3. Jetzt fließt ein Strom durch die Leuchtdiode 4, deren Lichtsignale über den Lichtwellenleiter 6 der Auswertschaltung 7 zugeführt werden. Die dortige Empfangsdiode 9 wandelt diese Lichtsignale in ein elektrisches Signal um. Die Auswertschaltung 7 gibt jetzt auf dem Ausgang 8 ein Signal ab, welches für die Anwesenheit des Molches 1 in der Molchstation steht. Die zentrale Steuerung SPS der Lackieranlage kann hierauf entsprechend reagieren, beispielsweise durch Umstellen von Ventilen oder dgl..

Die Wellenlänge, bei welcher die Leuchtdiode 4 arbeitet, ist grundsätzlich unerheblich. In vielen Fällen wird, schon aus Kostengründen, eine Infrarot-LED infrage kommen.

Der Lichtwellenleiter 6 bildet eine Potentialtrennung zwischen dem auf Hochspannung liegenden Meßkopf 2 und der Auswertschaltung 7. Statt eines solchen Lichtwellenleiters 6 kann zwischen dem Meßkopf 2 und der Auswertschaltung 7 auch eine Funkverbindung in einem entsprechenden, hierfür zugelassenen Frequenzbereich eingesetzt werden.

## Patentansprüche

1. Einrichtung zur Bestimmung der Position eines Molches,
der zum Transport von Beschichtungsmaterial, insbesondere von flüssigem oder pulverförmigen Lack, in einem Versorgungsweg des Beschichtungsmaterials verschiebbar ist, mit
a) einem auf die Anwesenheit des Molches ansprechenden Sensor;
b) einer Schaltungsanordnung, welcher das Ausgangssignal des Sensors zugeführt wird und ein elektrisches Ausgangssignal erzeugt, das für die An- oder Abwesenheit des Molches an dem Sensor repräsentativ ist,
**dadurch gekennzeichnet, daß**
c) der Sensor (3) in einem gesonderten Meßkopf (2) untergebracht ist, der eine innere, autarke Stromquelle (5), insbesondere eine Batterie, und eine Schaltungsanordnung enthält, die ein für die An- oder Abwesenheit des Molches (1) des Sensors (3) stehendes elektrisches Ausgangssignal erzeugt;
d) eine Auswertschaltung (7) vorgesehen ist, die elektrisch isoliert in einer Entfernung vom Meßkopf (2) angeordnet ist und ihrerseits ein elektrisches Ausgangssignal erzeugt, das zum Steuern anderer Anlagenteile verwendbar ist;
e) eine Einrichtung (4, 6) vorgesehen ist, welche die Information im Ausgangssignal des Meßkopfes (2) ohne galvanische Verbindung der Auswertschaltung (7) zuführt.

2. Einrichtung nach Anspruch 1, **dadurch gekennzeichnet,**
**daß** die im Merkmal e) beschriebene Einrichtung eine Leuchtdiode (4) in dem Meßkopf (2), einen an einem Ende von der Leuchtdiode (4) beleuchteten Lichtwellenleiter (6) und eine von dem anderen Ende des Lichtwellenleiters (6) beleuchtete, in der Auswertschaltung (7) angeordnete Empfangsdiode (9) umfasst.

3. Einrichtung nach Anspruch 1, **dadurch gekennzeichnet,**
**daß** die im Merkmal e) erwähnte Einrichtung einen Funksender in dem Meßkopf und einen Funkempfänger in der Auswertschaltung umfasst.
